# EUROPEAN PATENT APPLICATION

(11) **EP 1 383 097 A1**
(43) Date of publication of application: **21.01.2004**
(21) Application number: 03014260.8
(22) Date of filing: 25.06.2003
(51) Int. Cl.: G08C 17/00, H04L 12/12

(54) **System for controlling remote apparatuses**

(30) Priority: 10.07.2002 IT TO20020599
(71) Applicant: Telecom Italia S.p.A., 20123 Milano (IT)
(72) Inventor: Lupano, Michele, 10148 Torino (IT)
(74) Representative: Giannesi, Pier Giovanni

(57) **Abstract**

System for controlling remote apparatuses following the reception of a specific message, consisting of a sequence of characters initially defined by the user, to activate special procedures, for example a reset procedure that returns the program of the entire apparatus to a known initial status. The remote apparatus sends a feedback message to the supervising apparatus confirming that the reset operation has been performed. It can be achieved by means of a specific circuit or by integrating the circuit in new versions of microprocessors or microcontrollers to be marketed.

## Description

### Technical Field

The invention relates to electronic devices controlled by computers, specifically to a system for controlling remote apparatuses.

Electronic devices are often installed in locations that are either difficult or impossible to reach, such as those installed aboard satellites or in mobile telephone base transceiver stations in elevated positions that may be difficult to access during certain periods of the year. Devices capable of remotely recovering control via a terrestrial or wireless connection to avoid on-site interventions must be used in the case of faults due, for example, to unexpected events, accidents, software errors of the computer controlling the devices, etc. In such cases, the supervising centre must be capable of carrying out all the operations needed to deal with the contingency.

A similar problem occurs in less specialised contexts, where commonly used apparatuses would become more reliable and hardwearing if remotely controlled.

### Background Art

A solution to this problem may consist in equipping each remotely controllable apparatus with an integrated circuit exclusively arranged to receive a suitable control command, e.g. a reset command, and to run the command by re-initialising the other integrated circuits in the apparatus.

Alternatively, this function could be directly integrated in new versions of currently marketed microprocessors and microcontrollers, simply by including a redundant serial interface function that is normally available in most microcontrollers.

Integrated circuits capable of generating reset signals after receiving a certain message on a serial line are not currently marketed, whereas integrated circuits used to generate reset signals following the pressing of a button or a decrease in power voltage are already available.

A system employing a reset device is known and described in patent EP1094382, in which a workstation 4 is connected to a Local Area Network LAN. Processing boards 8, which the workstation accesses to download low-level software, are connected to the network via a serial port controller 6.

To perform this operation, the relevant board 8 must be remotely reset; this is obtained by means of a reset device 10, also equipped with a Local Area Network interface, via which it receives the relevant instructions from the workstation. The resetting operation is carried out by sending a reset signal to a dedicated input of said board 8.

In the case in which the various devices capable of pre-processing the command signals are not connected to a Local Area Network and in which a single communication channel is available between supervising apparatus and remote apparatus, i.e. a channel on which a single two-way serial flow can transit, both the data signal and the command signal for management operations, e.g. resetting operations, must be sent in the same flow. A typical channel of this type can be that supported by a wireless connection, an electrical or optical transmission line, by a serial line, etc. In this case, the command signals can be identified, detected and run univocally, keeping them separate from the data signals, with maximum priority of the remote apparatus that is equipped with a suitable, simple device.

DE 19959790 discloses a method for remotely resetting a memory circuit through a serial interface. The baud rate of a reset instruction is lowered with respect to the remaining data transmission, so that the bit length of the reset instruction is greater then the bit length of remaining data. The reset instruction is thus recognised by a detection circuit, which triggers a reset signal for the memory circuit. The solution illustrated in DE 19959790 however implies that serial interfaces in both the controlling and controlled devices are modified, in order to support and automatically detect different baud rates.

### Summary of the invention

The technical problems described are solved by the system, referred to in this invention, which controls a remote device through a supervising apparatus that communicates with said remote apparatus via a transmission channel. Upon reception of a specific message, consisting of a sequence of characters initially defined by the user that cannot be confused with data signals, on the transmission channel employed by the two apparatuses to communicate, the remote apparatus runs specific procedures, e.g. a reset procedure that returns the program of the remote apparatus to a known initial status. The remote apparatus sends a feedback message to the supervising apparatus confirming that the reset operation has been performed. This can be achieved by means of a suitable circuit or by integrating the circuit in the new versions of microprocessors or microcontrollers still to be marketed.

Specifically, this invention relates to a system for controlling remote apparatuses, as described in the preamble to claim 1.

### Brief Description of Drawings

These and other characteristics of the invention will now be described, by the way of example only, with reference to the following description of a preferred form of embodiment and to the accompanying drawings where:
Fig. 1 is a diagram illustrating the connection between a remotely controlled apparatus and a supervising apparatus;
Fig. 2 is a diagram in which the device according to the invention is inserted;
Fig. 3 is a block diagram of the device according to the invention; and
Fig. 4 is an example of embodiment,of the device.

### Detailed description of the preferred embodiments

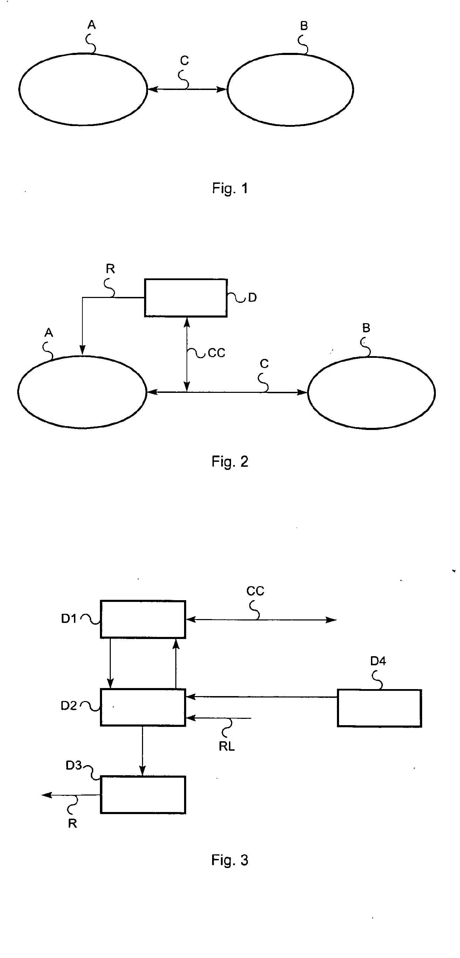

Figure 1 shows a remotely controlled apparatus A, a supervising apparatus B and a communication channel C, which may be a serial communication interface, a wireless connection, such as a radio link or a mobile cellular network, or a fibre optic connection.

Apparatus A may be a so-called "Machine To Machine", arranged to perform functions according to the specific application, e.g. measure physical quantities gauged by connected sensors.

The functions of apparatus B include supervising apparatus A, which is controlled by B in master-slave mode, via communication channel C. For example, B receives the measurements made by A in the form of a message organised as a sequence of characters responding to a predefined data structure.

Since apparatus B also performs supervisor functions, it must be capable of completely taking control of apparatus A at any time, taking it to a known status, especially if A no longer responds to normal commands exchanged via the communication channel C due to a failure.

In order to carry out this operation, an electronic device must be inserted to at least reset A remotely.

Fig. 2 illustrates the same layout as the previous figure, with the addition of a device D to reset the apparatus A following a specific command signal from apparatus B via communication channel C.

Specifically, device D is connected to B via a line CC which is an extension to communication channel C. In other words, A and D are connected in parallel to B, so that D is constantly aware of what is transiting on the communication channel C.

The new device D will be described below with respect to the functional block chart in Fig. 3. It consists of:
- a two-way interface D1;
- a unit D2 for processing the messages received from D1 and locally from the remote apparatus A itself, and for generating a feedback message for said apparatus B;
- a command signal generator D3;
- a possibly local reset input D4, e.g. a button.

The serial interface D1, for example according to the standard commonly known as RS232, is a functional block capable of transmitting and receiving alphanumeric characters in serial format on a transmission line consisting of two wires and a common ground wire. This device must permit two-way transfer on a pair of wires of single, alphanumeric characters, generally encoded by 7 or 8 bits. Each character is proceeded by a "start" bit (low) followed by a "stop" bit (high); the single bits are consequently comparable to pulses of a known duration, which are identical for the transmission and reception sections of D1. The bits form the character that is reconstructed in the initial parallel format in reception. The serial interface is always active to receive the characters received by A and transmitted by B.

The characters received by D1 are transferred to the processing unit D2, which is programmed to recognise a particular sequence of characters forming the command message, e.g. a reset message. The sequence must be adequately long or encoded in such a way that it is unlikely to appear at random.

If a received message coincides with the reset message (and only in this case), D2 reports the event to unit D3,. which generates the actual command signal, e.g. a reset signal, consisting of a change in the status of one or more electrical lines R leading to the apparatus A. This signal overrides apparatus A and makes it assume a known situation. For example, a reset signal can return the apparatus to the initial status, whereby satisfying the functional requirement of the invention.

Processing unit D2 must also be able to manage "local reset" request events, so that an operator on site can obtain the same effect as that of a remote "reset message" sent by supervising apparatus B.

"Local reset" events can include:
- pressing of local reset button D4;
- lowering of voltage powering apparatus A;
- reset request from the microprocessor of apparatus A.

Following either of the events listed below:
- reset message reception via CC,
- local reset,
the processing unit D2 sends a feedback message to supervising apparatus B, via the serial interface D1 and line CC, confirming that the reset operation has been performed. The feedback message sent back to the supervising apparatus B is particularly useful in case supervising and remote devices are connected by means of a noisy communication link, such as a radio channel or a mobile cellular line under unfavourable conditions.

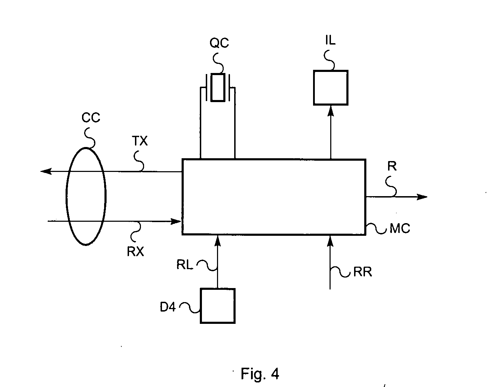

Figure 4 is a wiring diagram illustrating an example of embodiment of device D according to the invention.

The system can be made using a programmable microprocessor, e.g. a PIC 16F628 series microcontroller, for performing all the described functions.

The device consists of a single microcontroller MC, which is controlled by a quartz QC of suitable frequency to support the bit-rate in use on the serial interface CC. The microcontroller is programmed to perform the following functions:
- continuously receive characters on the serial line RX, belonging to CC;
- control the sequence of received characters to activate the reset procedure after acknowledging the correct sequence;
- check pressing of local reset button D4;
- check variations of local reset request line RR from the microcontroller that manages the apparatus A;
- run a reset procedure, outputting the respective signal on the line R and activating a reset in progress light indicator IL;
- send a confirmation message on the serial line TX belonging to CC.

The device D may be either a standalone unit or be integrated in a new version of microprocessor or microcontroller to be marketed, making the latter perform the described functions in addition to its own, thus creating processing devices provided with highly reliable remote communication interfaces.

## Claims

1. System for controlling remote apparatuses, comprising a remote apparatus (A), an apparatus (B) for supervising the remote apparatus (A) and a communication channel (C) between said apparatuses on which both data and command messages transit, said remote apparatus (A) being controlled by said supervising apparatus (B) by sending a command message, which is recognised as such by a device (D), installed in the remote apparatus (A) and coupled to said communication channel (C), said device (D) being active at all times when the system is in use to pick up what is transiting on the communication channel (C) without interruptions, **characterised in that** said remote apparatus (A) sends a feedback message to said supervising apparatus (B) , confirming that said command message has been received.

2. System according to claim 1, **characterised in that** said device (D) comprises:
- a two-way serial interface (D1) ;
- a unit (D2) for processing the messages received from said two-way serial interface (D1) and locally from the same remote apparatus (A), and for generating said feedback message;
- a command signal generator (D3), the signal consisting of a variation of status concerning one or more electrical lines (R) directed to said remote apparatus (A).

3. System according to claim 2, **characterised in that** said received message processing unit (D2) is capable of recognising said command message as a particular sequence of characters received from the two-way serial interface (D1).

4. System according to claim 3, **characterised in that** said command message is a reset message.

5. System according to claim 4, **characterised in that** said device (D) comprises a local reset input (D4).

6. System according to claim 5, **characterised in that** said received message processing unit (D2) is capable of recognising reset messages from either said local reset input (D4) or said remote apparatus (A).

7. System according to claim 3, **characterised in that** said sequence of characters is either sufficiently long or encoded in such as way to make its random appearance unlikely.

8. System according to claim 1, **characterised in that** said device (D) is connected to a line (CC) which is an extension of the communication channel (C).

9. System according to claim 1, **characterised in that** said device (D) consists of a microcontroller (MC) capable of performing one or more of the following functions:
- continuously receiving characters on the serial line (RX), belonging to said line (CC) connected to the communication channel (C) ;
- controlling the sequence of received characters to activate the reset procedure after acknowledging the correct sequence;
- checking local reset input (D4);
- checking variations of local reset request line (RR) from the microcontroller that manages the remote apparatus (A) ;
- running a reset procedure, outputting the respective signal on the line (R) and activating a light indicator (IL) ;
- sending a confirmation message on the serial line (TX) belonging to (CC) connected to the communication channel (C).

10. System according to claim 9, **characterised in that** said device (D) is integrated in a microprocessor or microcontroller capable of performing the aforesaid functions in addition to its own.

11. A device (D) for generating a command signal for a remote apparatus (A) controlled by a supervising apparatus (B) through a communication channel (C), said device (D) comprising:
- a two-way serial interface (D1) coupled to said communication channel (C),
- a unit (D2) for processing messages received from said two-way serial interface (D1),
- a command signal generator (D3) for generating said command signal responsive to a corresponding command message received from said supervising apparatus (B),
**characterised in that** it further comprises a feedback message generator (D2) for sending, through said two-way serial interface (D1), a feedback message to said supervising apparatus (B) confirming that said command message has been received.

12. A device according to claim 11, **characterised in that** said command signal consists of a variation of status concerning one or more electrical lines (R) directed to said remote apparatus (A).

13. A device according to claim 11, **characterised in that** said command message is a reset message and said command signal is a reset signal for said remote apparatus (A).

14. A device according to claim 11, **characterised in that** said a two-way serial interface (D1) is connected to a line (CC), which is an extension of said communication channel (C) .
